# EUROPEAN PATENT SPECIFICATION

(11) **EP 1 200 346 B1**
(45) Date of publication and mention of the grant of the patent: **17.09.2003**
(21) Application number: 00951417.5
(22) Date of filing: 19.07.2000
(51) Int. Cl.: C01B 33/193

(54) **PRECIPITATED SILICA, A PROCESS TO MAKE IT, AND ITS USE**
FÄLLUNGSKIESELSÄURE , HERSTELLUNGSVERFAHREN UND VERWENDUNG
SILICE PRECIPITEE, PROCEDE DE SA PRODUCTION, ET SON UTILISATION

(30) Priority: 28.07.1999 EP 99202485
(43) Date of publication of application: 02.05.2002
(73) Proprietor: Akzo-PQ Silica Vof, 3818 LE Amersfoort (NL)
(72) Inventor: DOKTER, Willem, Hendrik, NL-6191 VL Beek (NL); TIJBURG, Ivo, Ignatius, Maria, NL-3511 HV Utrecht (NL)
(74) Representative: Beetz, Tom
(86) International application number: EP0006967
(87) International publication number: WO01007364

(56) References cited:
- EP-A- 0 520 862
- EP-A- 0 647 591
- EP-A- 0 901 986
- FR-A- 2 763 581
- US-A- 5 846 506

## Description

The present invention pertains to a specific type of precipitated silica, a method to make such silica, and the use of this silica in elastomeric compositions, particularly in tires.

Precipitated silica is increasingly used as a filler for elastomers, particularly for use in tires for motor vehicles. Recent developments have resulted in processes to produce precipitated silica with improved properties, optionally after further treatment, such as treatment with coupling agents (silanization). Typically, the improved properties are said to relate to improved rheological behavior of the blend of the precipitated silica and the elastomer, i.e. the apparent viscosity of the blend is lower. The use of such precipitated silica in elastomers has resulted in elastomeric products with improved properties. In tires, for example, a reduction of the rolling resistance was observed.

However, there is a continued need for alternatives and improved products in this rapidly developing field. More particularly, industry is interested in precipitated silicas that are even easier to disperse in said elastomer and/or show a more time/cost-efficient treatment, e.g. with coupling agents, before being fully dispersible in the elastomer, and that result in elastomeric compositions (after vulcanization/curing) with low heat build-up, high wet grip, and low rolling resistance.

Surprisingly, it was found that the use of a new specific type of precipitated silica results in a process where the blend of silica and rubber again shows a low viscosity, and hence can be easily processed, while the elastomeric compositions obtained after vulcanization show equal or improved properties in comparison with compositions using state of the art precipitated silicas. The invention, therefore, relates to a new type of precipitated silica, a process to make this precipitated silica, and the use of the precipitated silica in elastomeric compositions, as well as to the elastomeric products obtained after vulcanization of the elastomeric compositions.

It is noted that conventional precipitated silicas for use in elastomers have been described in various references. The most relevant references relating to precipitated silica, processes to make precipitated silica, and its use in elastomers are discussed below.

EP-A-0 520 862 discloses a process wherein acid is added to a heel comprising water, electrolyte, and water glass, followed by the simultaneous addition of acid and water glass at a temperature of 79-95°C, in order to precipitate silica at a pH of 7.5-8.0. To complete the reaction extra acid is dosed at its conclusion to lower the pH to about 5.0. The resulting precipitated silica has a DOP oil absorption of 270-345 ml/100g, which correlates to a DBP absorption of about 240-345 ml/100g, a BET surface area of 155-190 m²/g, and a CTAB surface area of 149-180 m²/g.

EP-A-0 647 591 discloses a process wherein acid and water glass are added simultaneously to a heel of water and water glass in order to precipitate silica at 80-88°C and a pH of about 8.5-9.0, after which the reaction mixture is acidified to a pH of about 5.0. The resulting precipitated silica has a DBP absorption of 236-270 ml/100g, a BET surface area of 125-184 m²/g, and a CTAB value of 75-165 m²/g.

WO 98/50305 discloses a process wherein acid is added to a heel comprising water, optionally electrolyte, and water glass, to obtain a pH of about 7.5, followed by the simultaneous addition of acid and water glass at a temperature of 82-85°C, in order to precipitate silica at a pH of 7.5. To complete the reaction extra acid is dosed at its conclusion to lower the pH to about 5.0, the mixture is "digested" for 10 minutes at 82°C, and again acid is added to lower the pH to about 5.0. The resulting precipitated silica has a DBP oil absorption of 190-258 ml/100g, a BET surface area of 130-180 m²/g, and a CTAB surface area of 70-90 m²/g. The granulated product has a DBP oil absorption of 155-195 ml/100g, a BET surface area of 130-180 m²/g, and a CTAB surface area of 70-90 m²/g.

WO 98/50306 discloses a process wherein acid is added to a heel comprising water, optionally electrolyte, and water glass, to obtain a pH of 7.5-7.8, followed by the simultaneous addition of acid and water glass at a temperature of 78-87°C, in order to precipitate silica at a pH of 7.3-7.7. To complete the reaction extra acid is dosed at its conclusion to lower the pH to 5.1-5.5, the mixture is "digested" for 10 minutes at 78-87°C, and again acid is added to lower the pH to about 5.1-5.5. The resulting precipitated silica has a DBP oil absorption of 210-248 ml/100g, a BET surface area of 75-150 m²/g, a CTAB surface area of 55-114 m²/g. The granulated product has a DBP oil absorption of 202-229 ml/100g, a BET surface area of 83-187 m²/g, and a CTAB surface area of 61-95 m²/g.

WO 98/54090 discloses a process wherein acid is added to a heel comprising water, electrolyte, and water glass at a temperature of 74-75°C, to obtain a pH of about 7.7, followed by heating the mixture to 94°C and subsequent simultaneous addition of acid and water glass at this temperature, in order to precipitate silica at a pH of about 7.7. To complete the reaction extra acid is dosed at its conclusion to lower the pH to about 5.2, and the mixture is reacted further for 5 minutes. The resulting precipitated silica has a DOP oil absorption of 280-295 ml/100g, comparable to a DBP oil absorption of about 250-295 ml/100g, a BET surface area of 200-216 m²/g, and a CTAB surface area of 190-197 m²/g. In comparative examples a process is disclosed wherein acid is added to a heel comprising water, electrolyte, and water glass at a temperature of 70°C, to obtain a pH of about 8.0, followed by heating the mixture to 94°C and subsequent simultaneous addition of acid and water glass at this temperature, in order to precipitate silica at a pH of about 8.0. To complete the reaction extra acid is dosed at its conclusion to lower the pH to about 5.2, and the mixture is reacted further for 5 minutes. The resulting precipitated silica has a DOP oil absorption of 256 ml/100g, comparable to a DBP oil absorption of about 230-256 ml/100g, a BET surface area of 214-240 m²/g, and a CTAB surface area of 190-200 m²/g.

EP-A-0 901 986 discloses a process wherein a heel of water and optionally water glass is formed by mixing said optional water glass with water at a temperature of 69-80°C to obtain a pH of 7.5-9.0. To this heel, and at a temperature of 62-95°C, acid and water glass are added simultaneously in order to precipitate silica at a pH of presumably 7.5-9.0. Then the reaction mixture is optionally allowed to mature for 1 hour, after which further acid and water glass may be added simultaneously. To complete the reaction extra acid is dosed at its conclusion to lower the pH to 3-5. The specifically disclosed precipitated silicas have a DBP oil absorption of about 252-299 ml/100g, a BET surface area of 127-218 m²/g, and a CTAB surface area of 120-186 m²/g.

Surprisingly, a new process has been found to make novel precipitated silicas preeminently suitable for use as a replacement for conventional precipitated silicas in elastomeric compositions. The precipitated silica according to the invention is characterized by a Hg-intrusion peak maximum of 0.065 to 0.095, preferably 0.065 to 0.090, more preferably 0.066 to 0.085, most preferably 0.067 to 0.080 ml/(g•nm).
More particularly, the precipitated silicas according to the invention have
- a DBP oil absorption of 140-230, preferably 150-220, more preferably 145-180 ml/100g,
- a BET surface area of 100-220, preferably 150-200, more preferably 170-200 m²/g,
- a CTAB surface area of 100-200, preferably 140-200, more preferably 150-190, most preferably 162-190 m²/g, and
- a Hg-intrusion peak maximum of 0.065 to 0.095, preferably 0.065 to 0.090, more preferably 0.066 to 0.085, most preferably 0.067 to 0.080 ml/(g•nm).

The methods for determining the DBP oil absorption, the BET and the CTAB surface area values are mentioned in the experimental part of the examples.

The Hg-intrusion peak maximum (HPM) as used throughout this document relates to the peak maximum as derivable from the pore volume determination as disclosed in EP 0 520 862, using a contact angle of 130 degrees, a Hg surface tension of 484 dynes/cm, a Hg pressure from about 0.06 bar (absolute) to 2000 bar with a Hg pressure step size during the analysis such that about 50 measurements are obtained that are about equally spaced on the log (pore diameter) scale, and an equilibrium time of 30 seconds. At least 10 measurements, preferably about 15, need to be taken for pores with a size of 100-1000 nm and also at least 10 measurements, preferably about 15, need to be taken for pores with a size of 10-100 nm. More particularly, HPM is the maximum in the curve which is the first derivative of the smoothed (preferably 9 point moving average) curve of the accumulated intrusion of Hg in the pores.

Preferably, the precipitated silica according to the invention has a pore volume of 0.55-0.85 ml/g when measured according to DIN 66133 (applying a pressure from 7 to 500 bar) using an equilibrium time during the analysis of 30 seconds.

Although the inventors do not wish to be bound by the following theory, it is believed that the beneficial properties of the precipitated silica according to the invention are obtained because said precipitated silica has a relatively small number of large size pores. The absence of larger size pores is expected to result in a more "compact" precipitated silica, which in turn is considered to result in a lower elastomer viscosity when the precipitated silica is dispersed in/mixed with said elastomer. This lower viscosity facilitates the dispersion of the precipitated silica in the elastomer. Consequently, the use of the precipitated silica according to the invention allows a less elaborate treatment of the precipitated silica with coupling agents and results in better elastomer properties (after vulcanization).

The precipitated silica according to the invention is suitably produced in the following way:
- A reactor, preferably a well-stirred vessel of 0.030 m³, is charged with about 16.4 kg of an aqueous medium, preferably water, more preferably demineralized water, optionally comprising small amounts of salt(s) or compound(s). It is preferred, although not critical, to have a calcium concentration in said medium of about 20 ppm (as Ca²⁺). If necessary, the Ca concentration can be adjusted by adding CaSO₄ or demineralized water.
- The reactor contents are heated to 60-90°C, preferably 70-85°C, most preferably about 80°C, and maintained at this temperature throughout the following steps.
- Water glass (SiO₂/Na₂O weight ratio about 3.3, containing 15-25, preferably 17.5-20, more preferably about 18.5 percent by weight (%w/w) of SiO₂, and having a density of about 1.225 g/ml) is dosed into the reactor at a rate of 60-80 g/min, preferably about 75 g/min, for 70-105, preferably 80-100, more preferably about 90 minutes, so that about 6.6 kg of water glass is dosed.
- While the water glass is dosed, sulfuric acid (15-25%w/w, preferably about 18%w/w) is dosed as well. The dosing rate is chosen such that the pH during the precipitation of the silica is from 8-10, preferably from 9.0 to 9.6, more preferably about 9.3. Typically, about 2.8 kg of sulfuric acid (17.5%w/w) will be dosed.
- When the dosing is stopped, the reaction mixture is allowed to after-react at said pH for 3-45 minutes, preferably 8-25, more preferably about 15 minutes.
- Next, sulfuric acid is dosed in 5-20 minutes, preferably about 10 minutes, so that the pH is lowered to 6-8, preferably about 7.5. Typically, about 0.5 kg of sulfuric acid (17.5%w/w) is needed for this purpose.
- Water glass (18.5 %w/w of SiO₂) is again dosed into the reactor at about the same rate as before for about 20-60, preferably 35-55, more preferably about 45 minutes. About 2.8 kg of water glass will be dosed.
- Sulfuric acid is dosed at the same time to ensure that the pH is kept constant at 6-8, preferably about 7.5. Typically, about 1.4 kg (17.5%w/w) will be needed for this purpose.
- When the dosing is stopped, sulfuric acid is dosed in 10-30 minutes, preferably about 20 minutes, so that the pH is lowered to 3 - 5.5, preferably about 4.0. Typically, about 0.2 kg of sulfuric acid (17.5%w/w) is needed for this purpose.
- The precipitated silica is removed from the reactor, washed in a conventional way, e.g. by means of a filter press, dried in a conventional way, e.g. in a drying cabinet of 100-140°C, optionally milled, optionally compacted (e.g. granulated), and packed.

Preferably, the sulfuric acid and the water glass are dosed below the level of liquid in the reactor, for example by using so-called dip-pipes, this in order to prevent high local concentrations of these components.

The weight ratio of the amount of SiO₂ introduced via the dosed water glass in the first water glass dosage stage to the amount of aqueous medium in the reactor is preferably from 1 : 9.7 to 1 : 19.5, more preferably about 1 : 13.5.

Furthermore, the weight ratio of the amount of SiO₂ introduced via the dosed water glass in the second water glass dosage stage to the amount of aqueous medium present in the reactor before the first dosage stage is from 1 : 24 to 1 : 46, preferably about 1 : 27.

It is to be understood that the term "precipitated silica" as used relates to precipitated silica in the powdered form. However, if so desired, the powder may be converted into granules, pearls, beads, or other similar shapes by means of compacting. For ease of handling, i.e. for (pneumatic) transport, reduced bridging in silos, and reduced dust formation, as well as for a more efficient use of storage space, the precipitated silica is preferably compacted before use. Compaction may furthermore facilitate blending/mixing of the silica into the elastomer. Hence, a compacting step is preferably included in the process of the invention. The most preferred compacting step involves a granulation step. Optionally, the process involves a milling step to ensure that the precipitated silica particles have a certain size distribution. It was found that the precipitated silica properties, int. all the DBP oil absorption, the BET and CTAB surface area, and the Hg-intrusion peak maximum, were hardly influenced by a granulation and/or a milling step.

The drying step in itself is not critical. As indicated, conventional drying steps, e.g. using a drying cabinet, spray drying, flash drying, fluid bed drying, tray drying, rotary drying, and the like are all suitable. However, it was observed that the residence time of the precipitated silica in the dryer might influence its DBP oil absorption value. More specifically, drying times of just a few seconds to minutes (at higher temperatures) typically resulted in precipitated silica with a DBP absorption value near the higher end of the specified range, while slow drying, i.e. for tens of minutes or even hours, resulted in precipitated silica with a DBP absorption value near the lower end of the specified range.

The precipitated silica so obtained is preeminently suited for use in elastomers as a filler/reinforcing agent. The incorporation into the elastomer and the final elastomer composition are of the conventional type, except that the precipitated silica of the invention is applied. Favorable processing of the elastomer blend and excellent properties of the final elastomer article have been reported.

It is noted that the term "elastomer" as used throughout this document is meant to denominate all elastomeric compositions typically used in the industry. More particularly, it is a synthetic or natural rubber-comprising composition that may contain all the usual additives known in the art that are required to obtain finished articles comprising said (cured) compositions. As the use of the precipitated silica in tires is of particular interest and because the precipitated silica according to the invention is preeminently suited to such use, the term "elastomeric compositions" includes rubber compositions for use in tire treads. However, the precipitated silica according to the invention may also be used as a filler in rubber compositions for use as e.g. motor mounts, conveyor belts, and the like.

The following examples serve to elucidate the invention.

| Experimental | |
|---|---|
| Chemicals used | Supplier |
| CaSO₄•2H₂O | Merck, "foodgrade 516A" |
| Sulfuric acid | Baker, "analyzed, 95-97%", or Akzo Nobel, "technically pure ", 96% |
| Water glass | Akzo-PQ Silica, "38-40Be, SiO₂/Na₂O =3.27- 3.33" |

The BET surface area was analyzed in accordance with the method described by Brunauer, Emmet and Teller, *The Journal of the American Chemical Society,* Vol. 60, page 309, 1938.
The CTAB surface area was analyzed in accordance with method NFT 45007, November 1987.
The DBP oil absorption was analyzed in accordance with method ASTM D 1208.

Some precipitated silica products were incorporated into a standard rubber composition in order to evaluate the Mooney viscosity, the heat build-up, the wet grip, and the rolling resistance of the resulting products.
The applied standard rubber composition is as described in EP 0501227.
The Mooney viscosity and the heat build-up were measured using analytical method ISO 289/1-1994 and ASTM D 623/A, respectively.

The wet grip and the rolling resistance were calculated according to the so-called Futamura equations, which are well-known in the art.

### Example 1

A precipitated silica according to the invention was produced by:
- Charging a reactor, viz. a well-stirred vessel of 0.030 m³, with 16.4 kg of aqueous solution with a calcium concentration of about 20 ppm (as Ca²⁺).
- Heating the reactor content to about 80°C, and maintaining this temperature throughout the following steps.
- Dosing water glass (diluted, so that it contains about 18.5 %w/w of SiO₂) into the reactor at a rate of about 75 g/min for about 90 minutes.
- Dosing sulfuric acid (diluted to about 18%w/w) simultaneously with the water glass, such that the pH during the precipitation of the silica is about 9.3.
- After the reaction of the mixture, on conclusion of the dosing, maintaining said pH for about 15 minutes.
- Next, dosing sulfuric acid in about 10 minutes to lower the pH to 7.5.
- Subsequently, dosing water glass (18.5 %w/w of SiO₂) into the reactor at about the same rate as before for about 45 minutes. About 2.8 kg of water glass will be dosed.
- Dosing further sulfuric acid simultaneously with the water glass to ensure that the pH is kept constant at about 7.5.
- When the dosing of water glass is stopped, the dosing of sulfuric acid is continued for about 20 minutes to lower the pH about 4.0.
- Removing the precipitated silica from the reactor, washing it in a conventional way, i.e. with a filter press, drying it in a conventional way, i.e. in a drying cabinet at 110-140°C, and milling it.

The sulfuric acid and the water glass were dosed below the level of liquid in the reactor by using so-called dip-pipes.

### Examples 2-7

The procedure of Example 1 was repeated on a commercial scale.

In Example 2 the precipitated silica was granulated using a two-roll compactor. In Examples 3-5 the precipitated silica powder was analyzed. In Examples 6-7 the powder of Examples 3-5 was milled prior to analysis and packing to render a precipitated silica powder with an average particle size of 14.4 and 11.2 µm, respectively.

The analytical results with respect to pore size and pore size distribution of the precipitated silica of Examples 1-7 are presented in Table 1.

**Table 1**

| Example | 1 | 2 | 3 | 4 | 5 | 6 | 7 |
|---|---|---|---|---|---|---|---|
| BET (m²/g) | 179 | 191 | 187 | 187 | 191 | 183 | 185 |
| CTAB (m²/g) | 163 | 180 | 175 | 175 | 177 | 178 | 177 |
| DBP (ml/100g) | 172 | 160 | 167 | 166 | 169 | 162 | 164 |
| HPM (ml/(g•nm)) | 0.066 | 0.079 | 0.080 | 0.081 | 0.075 | 0.073 | 0.068 |

The results of the evaluation of the precipitated silica of Example 2 incorporated into a standard rubber composition are presented in Table 2.

**Table 2 :**

| Rubber composition containing precipitated silica according to Example 2 | |
|---|---|
| Mooney viscosity (M.U.) | 68 |
| Heat build up (°C) | 37 |
| Wet grip (MPa) | 3.8 |
| Rolling resistance (MPa^{0.2}) | 0.140 |

### Comparative Examples A-E

For comparative purposes, the results of the evaluation of conventional precipitated silicas promoted for use in elastomer compositions with improved properties are given below in Table 3. The performance of the silicas of Comparative Examples A, C, and D incorporated into a standard rubber composition is given in Table 4. All methods of analysis were identical.

**Table 3**

| C.E. | A | B | C | D | E |
|---|---|---|---|---|---|
| Product | Perkasil KS 408™ granules | Zeopol 8745™ granules | Ultrasil VN 7000™ granules | Zeosil 1165 MP™ pearls | HiSil 255™ granules |
| Supplied by | Akzo-PQ Silica | J.M. Huber Corp. | Degussa | Rhodia Chimie | PPG |
| BET (m²/g) | 185 | 168 | 178 | 146 | 160 |
| CTAB (m²/g) | 157 | 171 | 170 | 158 | 137 |
| DBP (ml/100g) | 193 | 235 | 242 | 201 | n.m. |
| HPM (ml/(g•nm)) | 0.057 | 0.058 | 0.057 | 0.060 | 0.055 |
| n.m. = not measured | | | | | |

**Table 4**

| C.E. | A | C | D |
|---|---|---|---|
| Mooney viscosity (M.U.) | 58 | 73 | 72 |
| Heat build up (°C) | 38.3 | 40 | 40 |
| Wet grip (MPa) | 1.95 | 3.3 | 3.5 |
| Rolling resistance (MPa^{0.2}) | 0.139 | 0.155 | 0.167 |

It is noted that the evaluation of the precipitated silica of Example 2 (Table 2) and Comparative Examples C and D (Table 4) in the rubber composition took place in the same test run, while the results of Comparative Example A were obtained in another test run.
Clearly, the precipitated silica according to the invention (Table 2) gave a rubber blend, before vulcanization, with a reduced viscosity, while the parameters of the vulcanized elastomer were improved, viz. higher wet grip, lower heat build-up, and lower rolling resistance.

## Claims

1. A process to make precipitated silica having a Hg-intrusion peak maximum of 0.065 to 0.095, preferably 0.065 to 0.090, more preferably 0.066 to 0.085, most preferably 0.067 to 0.080 ml/(g•nm)including the steps of:
a. Adding to a reactor comprising an aqueous medium, at a temperature of 60-90°C, preferably from 70 to 85°C, more preferably from 78 to 82°C, water glass and sulfuric acid, the dosing rate of the sulfuric acid being chosen such that a pH of 8.0-10.0 is maintained.
b. After-reading the reaction mixture at the same temperature and pH as in the first step, for 3-45 minutes, preferably 8 to 25 minutes, more preferably from 12 to 18 minutes,
c. Dosing sufficient suifuric acid in 5-20 minutes to lower the pH to 6-8,
d. Dosing further water glass and sulfuric acid, at a temperature of 60-90°C, preferably from 70 to 85°C, more preferably from 78 to 82°C, for 20-60 minutes, the dosing rate of the sulfuric acid being chosen such that a pH of 6-8 is maintained,
e. Dosing sufficient sulfuric acid in 10-30 minutes to lower the pH to 3-5.5 at a temperature of 60-90°C,
f. Removing the precipitated silica from the reactor, washing and drying it, optionally milling it, and optionally applying a granulation/compacting step.

2. The process according to claim 1 wherein the weight ratio of the amount of SiO₂ introduced via the dosed water glass in step a) to the amount of the aqueous medium in the reactor is from 1 : 9.7 to 1 : 19.5, preferably about 1 : 13.5, and optionally, the weight ratio of the amount of SiO₂ introduced via the dosed water glass in step d) to the amount of the aqueous medium in the reactor of step a) is from 1 : 24 to 1 : 46, preferably about 1 : 27.

3. The process according to claim 1 or 2 wherein the pH is from 9.0 to 9.6 in step a) and from 7.1 to 7.9 in step d).

4. A precipitated silica with a Hg-intrusion peak maximum of 0.065 to 0.095, preferably 0.065 to 0.090, more preferably 0.066 to 0.085, most preferably 0.067 to 0.080 ml/(g•nm), obtainable by the process of any one of claims 1-3.

5. The precipitated silica of claim 4 **characterized by**
- a DBP oil absorption of 140-230, preferably 150-220, more preferably 145-180 ml/100g,
- a BET surface area of 100-220, preferably 150-200, more preferably 170-200 m²/g,
- a CTAB surface area of 100-200, preferably 140-200, more preferably 150-190, most preferably 162-190 m²/g, and
- a Hg-intrusion peak maximum of 0.065 to 0.095, preferably 0.065 to 0.090, more preferably 0.066 to 0.085, most preferably 0.067 to 0.080 ml/(g•nm).

6. The precipitated silica of claim 4 or 5 further **characterized by** a pore volume (PV) of 0.55-0.85 ml/g when measured in accordance with DIN 66133 (applying a pressure from 7 - 500 bar).

7. Use of the precipitated silica of any one of claims 4-6 in an elastomeric composition.

8. An elastomeric article comprising the elastomeric composition of claim 7.

9. A tire tread comprising the elastomeric composition of claim 7.

## Patentansprüche

1. Verfahren zur Herstellung von ausgefälltem Silica mit einem Hg-Intrusionspeakmaximum von 0,065-0,095, vorzugsweise 0,065-0,090, weiter bevorzugt 0,066-0,085, am meisten bevorzugt 0,067-0,080 ml/(g·nm), das die folgenden Schritte umfasst:
(a) Zugabe von Wasserglas und Schwefelsäure in einen Reaktor, der ein wässriges Medium umfasst, bei einer Temperatur von 60-90°C, vorzugsweise 70-85°C, weiter bevorzugt 78-82°C, wobei die Zugabegeschwindigkeit der Schwefelsäure so gewählt ist, dass ein pH-Wert von 8,0-10,0 beibehalten wird,
(b) Nachreagieren der Reaktionsmischung bei der gleichen Temperatur und dem gleichen pH-Wert wie im ersten Schritt für 3-45 Minuten, vorzugsweise 8-25 Minuten, weiter bevorzugt 12-18 Minuten,
(c) Zudosieren von ausreichend Schwefelsäure innerhalb von 5-20 Minuten zur Absenkung des pH-Werts auf 6-8,
(d) Zudosieren von weiterem Wasserglas und weiterer Schwefelsäure bei einer Temperatur von 90-60°C, vorzugsweise 70-85°C, weiter bevorzugt 78-82°C, für 20-60 Minuten, wobei die Zugabegeschwindigkeit der Schwefelsäure so gewählt ist, dass ein pH-Wert von 6-8 aufrecht erhalten wird,
(e) Zudosieren von ausreichend Schwefelsäure innerhalb von 10-30 Minuten zur Absenkung des pH-Werts auf 3-5,5 bei einer Temperatur von 60-90°C,
(f) Entfernen des ausgefällten Silicas aus dem Reaktor, Waschen und Trocknen und gegebenenfalls Mahlen desselben und gegebenenfalls Anwenden eines Granulierungs/Kompaktierungsschrittes.

2. Verfahren gemäss Anspruch 1, worin das Gewichtsverhältnis der Menge an SiO₂, das über das zudosierte Wasserglas in Schritt (a) eingeführt wird, zu der Menge an wässrigem Medium in dem Reaktor 1:9,7-1:19,5 beträgt, vorzugsweise etwa 1:13,5, und das Gewichtsverhältnis der Menge an SiO₂, die über das zudosierte Wasserglas in Schritt (d) zugegeben wird, zu der Menge an wässrigem Medium in dem Reaktor in Schritt (a) beträgt gegebenenfalls 1:24-1:46, vorzugsweise etwa 1:27.

3. Verfahren gemäss Anspruch 1 oder 2, worin der pH-Wert in Schritt (a) 9,0-9,6 und in Schritt (d) 7,1-7,9 beträgt.

4. Ausgefälltes Silica mit einem Hg-Intrusionspeakmaximum von 0,065-0,095, vorzugsweise 0,065-0,090, weiter bevorzugt 0,066-0,085, am meisten bevorzugt 0,067-0,080 ml/(g·nm), das erhältlich ist nach dem Verfahren gemäss mindestens einem der Ansprüche 1 bis 3.

5. Ausgefälltes Silica gemäss Anspruch 4, das **gekennzeichnet ist durch**
- eine DBP-Ölabsorption von 140-230, vorzugsweise 150-220, weiter bevorzugt 145-180 ml/100 g,
- eine BET-Oberfläche von 100-220, vorzugsweise 150-220, weiter bevorzugt 170-200 m²/g,
- eine CTAB-Oberfläche von 100-200, vorzugsweise 150-190, weiter bevorzugt 162-190 m²/g und
- ein Hg-Intrusionspeakmaximum von 0,065-0,095, vorzugsweise 0,065-0,090, weiter bevorzugt 0,066-0,085, am meisten bevorzugt 0,067-0,080 ml/(g·nm).

6. Ausgefälltes Silica gemäss Anspruch 4 oder 5, das ferner **gekennzeichnet ist durch** ein Porenvolumen (PV) von 0,55-0,85 ml/g, gemessen gemäss DIN 66133 (unter Anwendung eines Drucks von 7-500 bar).

7. Verwendung von ausgefälltem Silica gemäss mindestens einem der Ansprüche 4 bis 6 in einer Elastomerzusammensetzung.

8. Elastomerartikel, der die Elastomerzusammensetzung gemäss Anspruch 7 umfasst.

9. Reifenlauffläche, die die Elastomerzusammensetzung gemäss Anspruch 7 umfasst.

## Revendications

1. Procédé de fabrication de l'oxyde de silicium précipité ayant un pic d'intrusion de Hg maximum de 0,065 à 0,095, de préférence 0,065 à 0,090, plus préférablement 0,066 à 0,085, de manière préférée entre toutes 0,067 à 0,080 ml/(g•nm), comprenant les phases consistant à :
a. Ajouter à un réacteur comprenant un milieu aqueux, à une température de 60-90°C, de préférence de 70 à 85°C, de plus préférablement de 78 à 82°C, un verre soluble et de l'acide sulfurique, le taux de dosage de l'acide sulfurique étant choisi de manière qu'un pH de 8,0-10,0 soit maintenu,
b. Faire réagir ensuite le mélange réactionnel à la même température et au même pH que dans la première phase, pendant 3-45 minutes, de préférence 8 à 25 minutes, plus préférablement de 12 à 18 minutes,
c. Doser suffisamment d'acide sulfurique en 5-20 minutes pour abaisser le pH à 6-8,
d. Doser encore du verre soluble et de l'acide sulfurique, à une température de 60-90°C, de préférence de 70 à 85°C, plus préférablement de 78 à 82°C, pendant 20-60 minutes, le taux de dosage de l'acide sulfurique étant choisi de manière qu'un pH de 6-8 soit maintenu,
e. Doser suffisamment d'acide sulfurique en 10-30 minutes pour abaisser le pH à 3-5,5 à une température de 60-90°C,
f. Retirer l'oxyde de silicium précipité du réacteur, le laver et le sécher, optionnellement le broyer et, optionnellement, appliquer une phase de granulation/compactage.

2. Procédé selon la revendication 1, dans lequel le rapport de poids entre la quantité de SiO₂ introduite au moyen du verre soluble dosé dans la phase a) et la quantité de milieu aqueux dans le réacteur est de 1:9,7 à 1:19,5, de préférence environ 1:13,5, et optionnellement, le rapport de poids entre la quantité de SiO₂ introduite au moyen du verre soluble dosé dans la phase d) et la quantité de milieu aqueux dans le réacteur de la phase a) est de 1:24 à 1:46, de préférence environ 1:27.

3. Procédé selon la revendication 1 ou 2, dans lequel le pH est de 9,0 à 9,6 dans la phase a) et de 7,1 à 7,9 dans la phase d).

4. Oxyde de silicium précipité ayant un pic d'intrusion de Hg maximum de 0,065 à 0,095, de préférence 0,065 à 0,090, plus préférablement 0,066 à 0,085, de manière préférée entre toutes 0,067 à 0,080 ml/(g•nm), pouvant être obtenu par le procédé selon l'une quelconque des revendications 1-3.

5. Oxyde de silicium précipité selon la revendication 4, **caractérisé par**
- une absorption d'huile DBP de 140-230, de préférence 150-220, plus préférablement 145-180 mg/100 g,
- une superficie BET de 100-220, de préférence 150-200, plus préférablement 170-200 m²/g,
- une superficie CTAB de 100-200, de préférence 140-200, plus préférablement 150-190, de manière préférée entre toutes 162-190 m²/g, et
- un pic d'intrusion de Hg maximum de 0,065 à 0,095, de préférence 0,065 à 0,090, plus préférablement 0,066 à 0,085, de manière préférée entre toutes 0,067 à 0,080 mg/(g•nm).

6. Oxyde de silicium précipité selon la revendication 4 ou 5, **caractérisé par** un volume poreux (PV) de 0,55-0,85 ml/g, mesuré en conformité avec DIN 66133 (en appliquant une pression de 7-500 bar).

7. Utilisation de l'oxyde de silicium précipité selon l'une quelconque des revendications 4-6 dans une composition d'élastomère.

8. Article élastomère comprenant la composition d'élastomère selon la revendication 7.

9. Bande de roulement de pneu comprenant la composition d'élastomère selon la revendication 7.
